**Europäisches Patentamt**

**European Patent Office**

**Office européen des brevets**

(19)

(11) Numéro de publication: **0 076 174**
**B2**

(12) # NOUVEAU FASCICULE DE BREVET EUROPEEN

(45) Date de publication du nouveau fascicule du brevet:
**22.06.88**

(51) Int. Cl.⁴: **B 60 J 3/02**

(21) Numéro de dépôt: **82401260.3**

(22) Date de dépôt: **05.07.82**

(54) **Pare-soleil, notamment pour véhicule automobile.**

(30) Priorité: **28.09.81 FR 8118233**

(43) Date de publication de la demande:
**06.04.83 Bulletin 83/14**

(45) Mention de la délivrance du brevet:
**11.12.85 Bulletin 85/50**

(45) Mention de la décision concernant l'opposition:
**22.06.88 Bulletin 88/25**

(84) Etats contractants désignés:
**DE GB IT SE**

(73) Titulaire: **COMPAGNIE INDUSTRIELLE DE MECANISMES en abrégé C.I.M. Société dite:, 6, Rue Barbès B.P. 70, F-92302 Levallois-Perret Cédex (FR)**

(72) Inventeur: **Canadas, Jean-Christophe, Résidence Gilles Méline, F-88200 Remiremont (FR)**
Inventeur: **Vigo, Gilles, 62 Le Riffin, F-88360 Rupt sur Moselle (FR)**

(74) Mandataire: **Moncheny, Michel et al, c/o Cabinet Lavoix 2 Place d'Estienne d'Orves, F-75441 Paris Cedex 09 (FR)**

(56) Documents cités:
**EP - A - 0 058 742**
**DE - A - 1 430 197**
**DE - A - 2 027 386**
**DE - A - 2 036 772**
**DE - A - 2 054 953**
**DE - A - 2 102 917**
**DE - A - 2 117 175**
**DE - A - 2 231 309**
**DE - U - 7 912 532**
**DE - U - 8 032 430**
**FR - A - 2 491 402**
**GB - A - 1 214 327**
**GB - A - 2 034 397**

EP 0 076 174 B2

## Description

La présente invention est relative à un pare-soleil, notamment pour véhicule automobile.

Le document GB-A 1 214 327 décrit un pare-soleil comportant deux demi-coquilles creuses assemblées l'une à l'autre, dont la première comporte un palier de bras support. Ce pare-soleil tend à l'usage à se déformer, et sa fabrication industrielle rencontre certaines complications.

Le but de l'invention est de fournir un pare-soleil qui soit particulièrement avantageux du point de vue du prix, du poids, de la stabilité de la forme et de la sécurité pour l'utilisateur.

A cet effet, le pare-soleil suivant l'invention est caractérisé en ce que la deuxième demi-coquille est en mousse de matière plastique et en ce que le palier de bras-support comprend une cage venue de moulage et à l'intérieur de laquelle est emprisonnée une lame-ressort.

Dans un mode de réalisation particulièrement simple à fabriquer industriellement, la cage venue de moulage est constituée de barreaux intérieurs parallèles à des barreaux extérieurs et décalés par rapport à ceux-ci. En effet, on obtient alors un ensemble première demi-coquille-cage qui est moulable sans noyau.

L'invention est exposée ci-après plus en détail à l'aide des dessins annexés, qui en représentent seulement un mode d'exécution. Sur ces dessins:

la Fig. 1 est une vue extérieure d'un pare-soleil suivant l'invention;

les Fig. 2 et 3 en sont des vues en coupe prises respectivement suivant les lignes 2–2 et 3–3 de la Fig. 1;

la Fig. 4 est une vue du côté intérieur de la demi-coquille en matière plastique injectée, avec arrachement partiel; et

la Fig. 5 est une vue du côté intérieur de l'autre demi-coquille.

Le pare-soleil représenté aux dessins sera supposé dans la suite en position active verticale. Il est essentiellement constitué de deux demi-coquilles accolées de forme générale plane. La demi-coquille arrière 1 est creuse, en matière plastique injectée, trandis que la demi-coquille avant 2 est pleine et réalisée en mousse de matière plastique expansée. Ces deux demi-coquilles ont pour l'essentiel le même contour, et elles sont maintenues assemblées par le thermo-soudage le long de leur plan de joint de deux feuilles arrière 5 et avant 4 en matière plastique qui constituent ensemble le revêtement décoratif du pare-soleil.

Chaque demi-coquille 1, 2 possède une surface extérieure plane bordée d'un arrondi périphérique à section en quart de cercle. La face intérieure de la demi-coquille 2 est plane pour l'essentiel et est bordée d'un évidement peu profond 5 qui reçoit et positionne le rebord périphérique 6 de la demi-coquille 1.

Cette dernière présente à une extrémité de son bord supérieur une encoche ou échancrure 7 dont l'entrée est barrée par un tourillon cylindrique 8 venu de moulage qui sert de support secondaire du pare-soleil. Près de l'autre extrémité du même bord, la demi-coquille 1 porte un palier 9 du bras-support 18 constitué d'une cage 10 venue de moulage et d'un ressort à lame 11 emprisonné dans celle-ci.

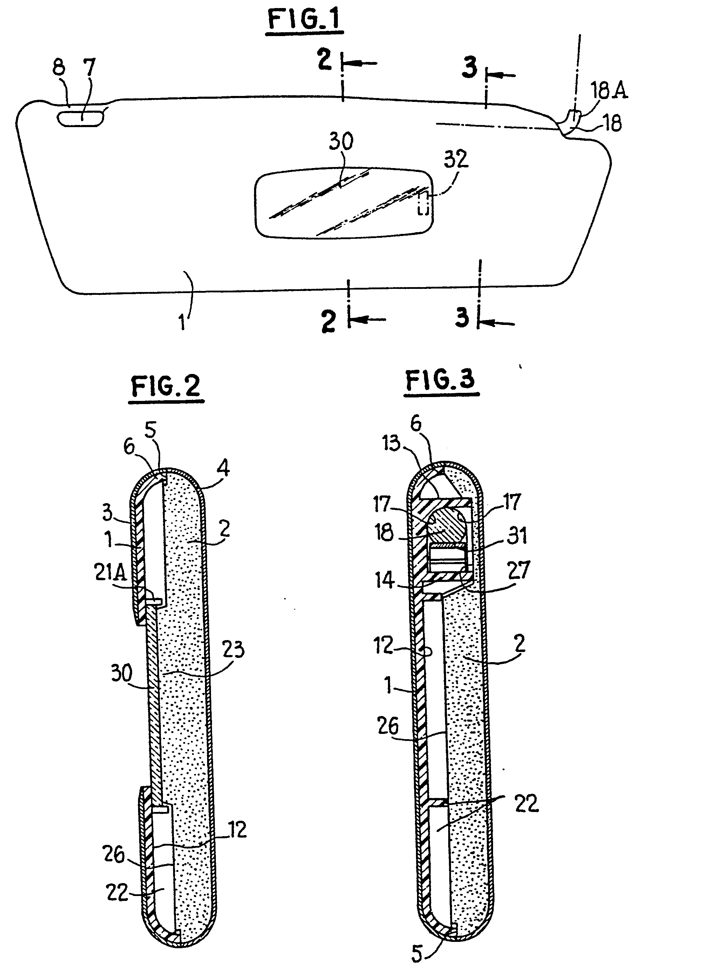

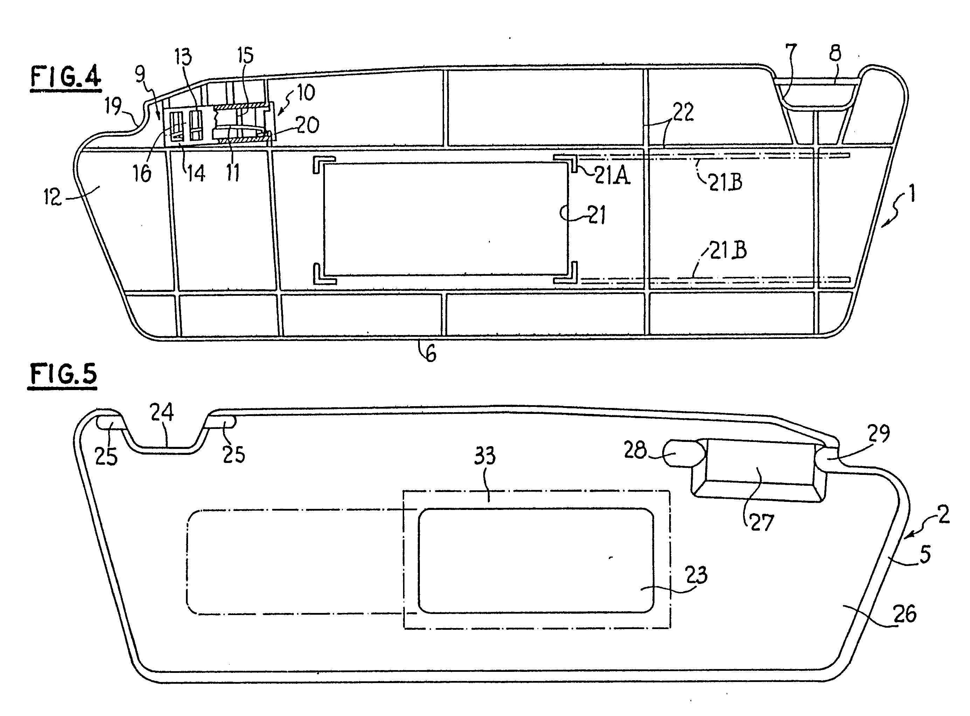

La cage 10 fait saillie sur la face intérieure plane 12 de la demi-coquille 1. Elle comporte des parois supérieure 13 et inférieure 14 à peu près horizontales, parallèles l'une à l'autre et à génératrices perpendiculaires à la face 12, et des barreaux verticaux qui relient ces deux parois. Les barreaux extérieurs 15 et les barreaux intérieurs 16 sont intercalés, en vue de face suivant la Fig. 4. Les barreaux 15 et 16, ou au moins certains d'entre eux, comportent une partie de voûte 17 en quart de cercle, de sorte que la cage, vue en bout (Fig. 3), définit une voûte discontinue en demi-cercle au diamètre du bras-support 18 du pare-soleil. De plus, le rebord 6 forme dans l'axe de la cage 10 un demi-palier d'entrée 19 à diamètre vertical.

Le ressort 11 est bombé et présente des extrémités recourbées à 180°. Il est positionné axialement avec jeu entre des rebords transversaux 20 en saillie sur la paroi inférieure 14 de la cage 10 aux extrémités de celle-ci.

Dans la région centrale de la demi-coquille 1 est ménagée une fenêtre rectangulaire 21 bordée à chaque coin d'un relief 21A en forme de cornière. Le reste de la face 12 de cette demi-coquille est pourvu d'un nervurage 22 de rigidification, renforcé près de la cage 10 et de l'encoche 8.

La demi-coquille 2 présente en regard de la fenêtre 21 un bossage rectangulaire 23 à peu près de mêmes dimensions. Une encoche 24 analogue à l'encoche 7 est ménagée en position correspondante; à l'entrée de cette encoche débouchent deux petites rainures 24 qui reçoivent les extrémités du tourillon 8. A l'autre extrémité du bord supérieur de cette demi-coquille, la face intérieure 26 de celle-ci est pourvue d'un évidement 27 qui reçoit la cage 10 et dans chaque extrémité duquel débouche une rainure 28–29 formant un demi-palier pour le bras-support 18.

Un miroir 30 est collé par pratiquement tout sa face arrière sur le bossage 23. Quand les deux demi-coquilles sont assemblées, les nervures 22 butent sur la face 26; le miroir est positionné par les reliefs 21A et est pressé contre la face 12, sur le pourtour de la fenêtre 21, par le bossage 23, tandis que les demi-paliers 19 et 29 définissent ensemble un palier d'entrée du bras-support 18.

Pour assembler le pare-soleil, il suffit de coller le miroir 30 sur le bossage 23, d'introduire le ressort 11 dans la cage 10, d'accoler les deux demi-coquilles et de mettre en place le revêtement 3, 4 en le thermosoudant. Le ressort 11 est pré-positionné par les barreaux 15, 16 et les rebords 20, et il est maintenu à l'état comprimé par le bras-support 18, que l'on enfile dans le palier 19–29 puis à travers la cage 10.

Le bras-support 18 présente à une extrémité un nez arrondi pour faciliter son introduction dans le pare-soleil. Son autre extrémité 18A est coudée

et est destinée à être articulée sur le pavillon d'un véhicule.

En traversant la cage 10, le bras-support repousse élastiquement vers le bas la partie centrale du ressort 11, ce qui fournit le couple résistant souhaité. Le bras-support peut être pourvu d'au moins un méplat 31, pour définir au moins une position à stabilité renforcée du pare-soleil, correspondant par exemple à sa position inactive relevée.

La relative rigidité de la demi-coquille 1 assure une bonne stabilité dans le temps de la forme du pare-soleil. La grande souplesse de la demi-coquille 2, qui est dirigée vers l'utilisateur lorsque le pare-soleil est relevé, améliore la sécurité en cas de choc. Le pare-soleil est très léger, et chaque demi-coquille est moulable facilement, sans noyau, notamment du fait de la conception de la cage 10.

Le collage du miroir sur le bossage 23 permet de se passer de toute feuille anti-bris de glace sur la face arrière de ce miroir. En variante, on pourrait utiliser une telle feuille et ne pas coller le miroir. Ce serait en particulier le cas si deux des quatre reliefs 21A étaient remplacés par des glissières longitudinales 21B. Le bossage 23 serait alors prolongé et le miroir serait pourvu d'un organe d'actionnement 32 en saillie dans la fenêtre 21 et serait ainsi monté coulissant dans le pare-soleil pour pouvoir être escamoté. Dans ce cas, le bossage 23 porterait de préférence en regard de la fenêtre 21 un morceau de revêtement 33 assorti au revêtement 3, 4 du pare-soleil. Une telle variante est illustrée en traits mixtes aux Fig. 1, 3 et 4.

Le pare-soleil peut bien entendu être équipé d'un dispositif d'éclairage associé au miroir.

## Revendications

1. Pare-soleil, notamment pour véhicule automobile, comprenant deux demi-coquilles (1, 2) assemblées l'une à l'autre, la première demi-coquille (1) étant creuse et en matière plastique injectée et comportant un palier (9) de bras-support, caractérisé en ce que la deuxième demi-coquille (2) est creuse et en mousse de matière plastique, et en ce que le palier (9) de bras-support comprend une cage (10) venue de moulage et à l'intérieur de laquelle est emprisonnée une lame-ressort (11).

2. Pare-soleil selon la revendication 1, caractérisé en ce que la cage (10) est constituée de barreaux intérieurs (16) parallèles à des barreaux extérieurs (15) et décalés par rapport à ceux-ci.

3. Pare-soleil selon l'une des revendications 1 et 2, caractérisé en ce que la lame-ressort (11) est retenue par des saillies de la cage.

## Claims

1. A sun-glare shield, in particular for an automobile vehicle, comprising two semi-shells assembled with each other, the first semi-shell (1) being hollow and of injected plastics material and comprising a bearing (9) for a support arm, characterized in that the second semi-shell (2) is hollow and made of a foam of plastics material, and in that the bearing (9) for a support arm is provided with a moulded cage (10) within which a spring strip (11) is confined.

2. A sun-glare shield according to claim 1, wherein the cage (10) is formed by inner bars (16) which are parallel to outer bars (15) and offset relative to the outer bars.

3. A sun-glare shield according to anyone of claims 1 and 2, wherein the string strip (11) is retained by two end projections (20) of the cage.

## Patentansprüche

1. Sonnenblende, insbesondere für ein Kraftfahrzeug, mit zwei miteinander verbundenen Halbschalen (1, 2), wobei die erste Halbschale (1) hohl ist, aus gespritztem Kunststoff besteht und ein Tragarmlager (9) aufweist, dadurch gekennzeichnet, dass die zweite Halbschale (2) hohl ist und aus Kunststoffschaum besteht und dessen Tragarmlager (9) einen formgepressten Käfig (10), in welchem ein Federblatt (11) eingesperrt ist, aufweist.

2. Sonnenblende nach Anspruch 1, dadurch gekennzeichnet, dass der Käfig (10) aus Innenstäbe (16) besteht, die parallel zu Aussenstäben (15) und zu diesen versetzt angeordnet sind.

3. Sonnenblende nach einem der Ansprüche 1 und 2, dadurch gekennzeichnet, dass das Federblatt (11) durch Endvorsprünge des Käfigs gehalten ist.

## FIG.1

## FIG.2

## FIG.3

0076174

## FIG.4

## FIG.5